# EUROPÄISCHE PATENTSCHRIFT

(11) **EP 2 463 739 B1**
(45) Veröffentlichungstag und Bekanntmachung des Hinweises auf die Patenterteilung: **30.10.2013**
(21) Anmeldenummer: 11190097.3
(22) Anmeldetag: 22.11.2011
(51) Int. Cl.: G05D 11/13

(54) **Mixer für eine Getränkeabfüllanlage**
Mixer for a drink filling assembly
Mélangeur pour une installation de remplissage de boissons

(30) Priorität: 10.12.2010 DE 102010062798
(43) Veröffentlichungstag der Anmeldung: 13.06.2012
(73) Patentinhaber: Krones AG, 93073 Neutraubling (DE)
(72) Erfinder: Engel, Erwin, 93093 Donaustauf (DE)
(74) Vertreter: Grünecker, Kinkeldey, Stockmair & Schwanhäusser

(56) Entgegenhaltungen:
- EP-A1- 1 574 250
- WO-A1-2006/094039
- DE-A1- 3 501 127
- US-A- 5 160 244
- US-A- 5 482 368
- US-A1- 2010 031 825

## Beschreibung

Die Erfindung betrifft einen Mixer zum Mischen und Fördern von unterschiedlichen Fluiden für eine Getränkeabfüllanlage, mit zumindest einem ersten Behälterabschnitt, zur Aufnahme eines ersten Ausgangsfluids, mit einem zweiten Behälterabschnitt, zur Aufnahme eines zweiten Ausgangsfluids, wobei eine erste Pumpe in einer aus dem ersten Behälterabschnitt führenden ersten Leitung angeordnet ist, um das erste Ausgangsfluid einem Mischungsbereich zuzuführen, und eine zweite Pumpe in einer aus dem zweiten Behälterabschnitt führenden zweiten Leitung angeordnet ist, um das zweite Ausgangsfluid dem Mischungsbereich zuzuführen.

Solche Mixer sind aus dem Stand der Technik bekannt und werden bei Getränkeabfüllanlagen eingesetzt. In solchen Mixern wird ein erstes Ausgangsfluid, wie z.B. Wasser, mit einem zweiten Ausgangsfluid, wie z.B. einem Sirup, gemischt. Ferner führt der Mixer an einer im Mischungsbereich enthaltenen oder dem Mischungsbereich nachgelagerten Stelle ein Imprägnierungsmittel der aus den beiden Flüssigkeiten hergestellten Vormischung zu. Die Vormischung, die ein Gemisch aus Wasser und Sirup ist, wird dann mit einem Gas versetzt. Das mit Gas versetzte Gemisch wird nachfolgend in einem eigenen Behälter zwischengelagert, um an einem Füller in Gebinde, wie Flaschen, abgefüllt zu werden.

Benachbarter Stand der Technik ist beispielsweise aus der DE 43 15 234 C2 bekannt. Dort wird ein Verfahren und eine Vorrichtung zur Herstellung von Flüssigkeitsgemischen aus verschiedenen Einzelkomponenten offenbart. Das in dieser Druckschrift offenbarte Verfahren bezieht sich auf die Einspeisung von einzelnen Komponenten oder Teilmengen davon in eine oder mehrere Zwischenstufen einer mehrstufigen Kreiselpumpe.

Eine weitere Druckschrift, nämlich die DE 35 01 127 C2, beschäftigt sich mit einer Vorrichtung zum Herstellen von Mischgetränken aus mindestens zwei flüssigen Komponenten, von denen eine Wasser ist. Die beiden Komponenten werden einer Mischkammer zugeführt, und zwar unter Zuhilfenahme einer elektrisch angetriebenen Pumpe für jede Komponente. Der dortige Gegenstand ist dadurch gekennzeichnet, dass die Pumpe für das die eine Komponente bildende Wasser eine Kreiselpumpe mit separatem Antrieb ist, dass ein Regler vorgesehen ist, dem ein Istwert-Signal zugeführt wird, das der Menge des der Mischkammer zugeführten Wassers entspricht, und dem ein weiteres Istwert-Signal zugeführt wird, das der Drehzahl des Elektromotors für die die zweite Komponente fördernde Pumpe entspricht, und dass der Regler ein SollwertSignal erzeugt, mittels welchem die Spannung und/oder der Strom für den Elektromotor steuerbar ist, der die die zweite Komponente fördernde Pumpe antreibt.

Bisher werden jedoch immer Asynchronmotoren verwendet, die die entsprechenden Pumpen antreiben, wobei die Regulierung der Menge an erstem und/oder zweitem Ausgangsfluid durch nachgeschaltete Drosseln erreicht wird. Diese Drosseln haben jedoch den Nachteil, dass sie Strömungswiderstände hervorrufen, die die hydraulische Effizienz beeinträchtigen. Bei bestehenden Anlagen werden auch die beteiligten flüssigen Komponenten in jeweils einem gesonderten Behälter aufbewahrt, wodurch mehrere unterschiedliche Behälter zu verwenden sind, dass sich maßgeblich im Herstellpreis des Mixers negativ bemerkbar macht.

Auch ist es bisher üblich, die einzelnen Komponenten, also z.B. das erste und zweite Ausgangsfluid unter Nutzung eines Regelventils und eines erhöhten Druckes zu dosieren. Der erhöhte Druck, unter welchem die flüssigen Komponenten gehalten werden, erfordert einen hohen Einsatz an elektrischer Leistung, was negativ zu werten ist. Auch wirkt die Fahrweise der verwendeten Pumpen im sogenannten Drosselbetrieb einer hohen hydraulischen Effizienz der Pumpen entgegen. Ferner zeigt sich im Stand der Technik, dass die Antriebe der Pumpen, aufgrund der "unscharfen" Auslegung und infolge des Teils ausgedehnten Betriebsbereichs über weite Strecken sehr ungünstige Energie-Effizienzen aufweisen.

Ein Mixer mit den Merkmalen des Oberbegriffs des Anspruchs 1 ist aus der US 2010/0031825 bekannt.

Es ist die Aufgabe der vorliegenden Erfindung, die Nachteile aus dem Stand der Technik zu vermeiden und einen Mixer zur Verfügung zu stellen, der erheblich günstiger herstellbar ist und gleichzeitig eine optimierte Energie-Effizienz aufweist. Nachgeschaltete teure Regelventile sollen vermieden werden.

Diese Aufgabe wird erfindungsgemäß mit einem Mixer mit den Merkmalen des Anspruchs 1 gelöst.

Auf diese Weise wird die Anzahl der beteiligten Behälter erheblich reduziert, da nur noch ein gemeinsamer Behälter für die unterschiedlichen Ausgangsfluide vonnöten ist. Auch kann durch Nutzung des Frequenzumformers auf die Synchronmotoren derart eingewirkt werden, dass die erste Pumpe und die zweite Pumpe entsprechend der Anregung des Frequenzumformers mehr oder weniger Flüssigkeit, also mehr oder weniger Masse des ersten Ausgangsfluids und mehr oder weniger Masse des zweiten Ausgangsfluids, aus dem gemeinsamen Behälter entzieht. Eine Druckreduzierung in einer Drosselung entfällt somit, wodurch die ersten und zweiten Ausgangsfluide in dem gemeinsamen Behälter bereits mit einem minimierten Druck vorgehalten werden können. Eine Druckreduktion in einer nachgelagerten Drossel entfällt nämlich. Statt bisher üblicher Asynchronmotoren wird durch die Verwendung von Synchronmotoren auf der Antriebsseite eine höchste Effizienz erreicht. Aufgrund der Durchflussregelung mittels Modulation der Drehzahl der jeweiligen Kreiselpumpe kann auf Verdrängerpumpen oder Regelventile verzichtet werden. Auch ist es möglich, den jeweils benötigten Betriebspunkt, bezüglich der Fließmenge, in Anpassung der Drehzahl der jeweiligen Kreiselpumpe definiert anzufahren. Dies resultiert in einer energieeffizienteren Ausgestaltung des Mixers.

Die Produktführung, also die Führung der Ausgangsfluide sowie des Gemisches aus den beiden Ausgangsfluiden mit oder ohne Imprägnierungsmittel, wird in der Nähe des physikalisch bedingten Sättigungsdruckes möglich, das wiederum in einer energieeffizienteren Auslegung des Mixers resultiert und auch Gasverluste nach Einbringen eines Imprägnierungsmittels, beispielsweise in einem Kopfraum eines das fertige Gemisch lagernden Behälters, vermieden.

Sollte bei empfindlichen Produkten eine Produktführung auch oberhalb des physikalisch bedingten Sättigungsdruckes vonnöten sein, so ist dies ebenfalls möglich, wobei eine Zudosierung unter Verwendung eines optionalen Regelventils erreicht wird, das anhand eines gemessenen Differenzdrucks den benötigten Öffnungsgrad zugewiesen bekommt. Dies wird als Kᵥ-Wert-Steuerung bezeichnet. Ein Verlust an Imprägniergas im letzten Sammelbehälter wird minimiert.

Vorteilhafte Ausführungsformen sind in den Unteransprüchen beansprucht und werden nachfolgend näher erläutert.

So ist es von Vorteil, wenn die erste Pumpe und die zweite Pumpe jeweils als Kreiselpumpe ausgebildet ist. Gerade solche Kreiselpumpen lassen sich besonders gut steuern und haben auch einen sehr hohen Wirkungsgrad bei gleichzeitig niedrigen Kosten.

Wenn im Mischungsbereich, nach einem Einmündungsbereich der zweiten Leitungen in die erste Leitung, ein Kühler angeordnet ist, wobei ferner eine Gemischpumpe zum Fördern der gekühlten Mischung aus dem ersten und zweiten Ausgangsfluid zu einem Injektor stromabwärts der ersten und zweiten Pumpe angeordnet ist, so lässt sich einerseits das Gemisch an Flüssigkeit, das aus dem ersten Ausgangsfluid und dem zweiten Ausgangsfluid gewonnen ist, entsprechend kühlen sowie einem Injektor mit auf den Injektor bezüglich der Zuliefergeschwindigkeit optimierten Geschwindigkeit zuführen.

Es ist ferner von Vorteil, wenn ein Injektorausgangsbereich mit einem dritten Behälterabschnitt des Behälters verbunden ist, beispielsweise über eine Leitung, um das zur Abfüllung an der Getränkeabfüllanlage vorbereitete Fluid zwischenzulagern. Die Verarbeitbarkeit des fertigen Gemisches wird dadurch verbessert, genauso wie eine Pufferkapazität beim Ausfall des Füllers realisiert wird. Da häufig zusätzliche Mittel dem Gemisch aus dem ersten Ausgangsfluid und dem zweiten Ausgangsfluid zuzuführen sind, ist es von Vorteil, wenn der Injektor zur Zuführung eines Imprägnierungsmittels, wie Gas, ausgelegt ist.

Es ist dann ferner von Vorteil, wenn das erste Ausgangsfluid eine Flüssigkeit, wie Wasser, ist, das zweite Ausgangsfluid eine Flüssigkeit, wie Sirup, ist und das Imprägnierungsmittel, CO₂, O₂, Stickstoff, Luft oder Lachgas sowie eine Mischung mit diesen Bestandteilen ist. Auf diese Weise können zahlreiche Getränke erzeugt werden, die sich im Markt durchgesetzt haben.

Wenn eine dem Injektor nachgelagerte Bypass-Leitung einen Kreislauf vom Einmündungsbereich, über den Kühler, die synchronmotorisch angetriebene Gemischpumpe, den Injektor bis zum Einmündungsbereich, oder anders herum, gewährleistet, so kann das Gemisch mit bezüglich des Injektors optimierter Geschwindigkeit zugeführt werden, wobei gleichzeitig aber das Mischungsverhältnis der Ausgangsfluide und deren Mengen veränderbar ist. Auch kann bei gleichbleibender Gemischgeschwindigkeit am Injektor eine variable Arbeitsgeschwindigkeit gewählt werden. Ferner lassen sich dabei unterschiedliche Mengen an erstem und/oder zweitem Ausgangsfluid dem Kühler und/oder der Gemischpumpe zuführen. Über das Nutzen der Bypass-Leitung zum Erzielen eines Kreislaufes lässt sich auch die Homogenität des erzielten End-Gemisches erhöhen.

Wenn dem dritten Behälterabschnitt eine synchronmotorisch angetriebene Produktpumpe nachgelagert ist, so lässt sich auch hier auf spezielle Drosseln verzichten und bei entsprechender Ansteuerung des Synchronmotors durch die Produktpumpe, die vorzugsweise als Kreiselpumpe ausgestaltet ist, eine gezielte Menge an fertigem Gemisch aus dem drei Kammern umfassenden Behälter entziehen.

Die hydraulische Effizienz lässt sich steigern, wenn in dem Mixer keine separate Drossel verbaut ist.

Die Erfindung betrifft auch eine Getränkeabfüllanlage, die erfindungsgemäß dadurch gekennzeichnet ist, dass sie einen Mixer, wie vorgehend ausgeführt, umfasst.

Gleitringdichtungen, beispielsweise in Motornähe, lassen sich vermeiden, wenn ein Motor mit Direktantrieb oder ein getriebeloser Motor, wie ein Torquemotor, als Synchronmotor für eine der Pumpen eingesetzt ist.

Auch betrifft die Erfindung ein Verfahren zum Betreiben einer Getränkeabfüllanlage, die einen Mixer, wie zuvor ausgeführt, enthält.

Ein solches Verfahren ist dadurch gekennzeichnet, dass der Frequenzumformer des jeweiligen Synchronmotors der ersten Pumpe, der zweiten Pumpe, der Gemischpumpe und/oder der Produktpumpe so angesteuert wird, dass über eine Modulation der jeweiligen Pumpe eine Durchflussregelung erreicht wird.

Der Wirkungsgrad des Verfahrens verbessert sich, wenn am Injektor der Durchfluss an gemischter Flüssigkeit konstant gehalten wird, die Arbeitsgeschwindigkeit der einzelnen Komponenten aber variabel gehalten wird. Das Zuführen an Imprägnierungsmitteln, kann dann bezüglich der Durchflussgeschwindigkeit des Injektors optimiert werden. Insbesondere wenn der Injektor als Venturi-Düse ausgestaltet ist, kann das Gas mit auf die Venturi-Düse optimierter Geschwindigkeit zugeführt werden, wobei die durch den Injektor fließende Gemischmenge an Flüssigkeit, also bestehend aus dem ersten Ausgangsfluid und dem zweiten Ausgangsfluid, ebenfalls bezüglich ihrer Zuführgeschwindigkeit auf die Venturi-Düse angepasst ist.

Die Erfindung wird nachfolgend mit Hilfe einer Zeichnung näher erläutert. Diese Zeichnung zeigt:

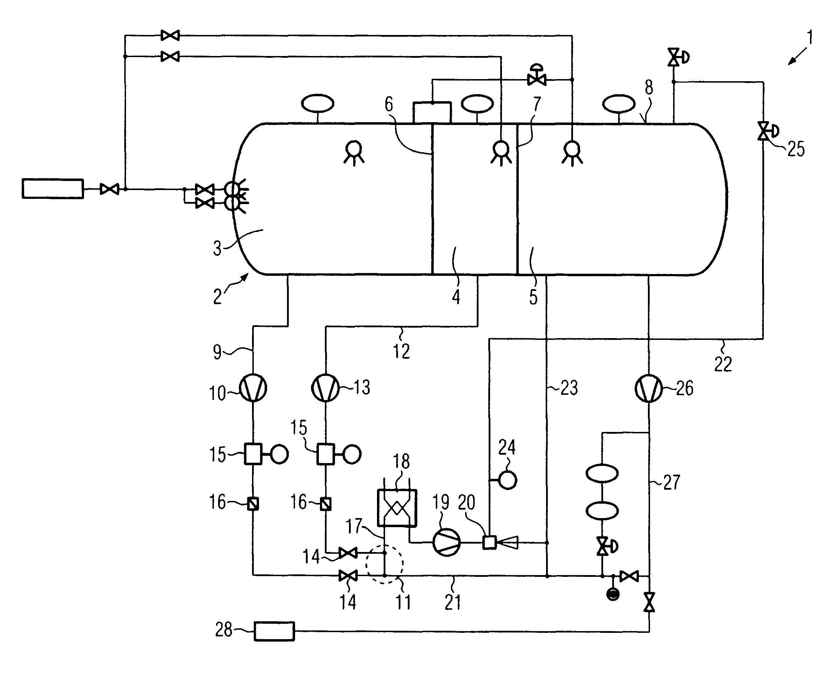

- Fig. 1: einen Mixer für eine Getränkeabfüllanlage in einer ersten Ausführungsform.

Die Figur ist lediglich schematischer Natur und dient ausschließlich dem Verständnis der Erfindung.

In Figur 1 ist ein Mixer 1 dargestellt. Der Mixer weist einen Behälter 2 auf. Der Behälter 2 ist in unterschiedliche Behälterabschnitte 3, 4 und 5 aufgeteilt. Der erste Behälterabschnitt 3 ist zumindest partiell mit einem ersten Ausgangsfluid, wie einer Flüssigkeit, beispielsweise Wasser, befüllt. Der erste Behälterabschnitt 3 ist von einem zweiten Behälterabschnitt 4 fluiddicht getrennt. In dem zweiten Behälterabschnitt 4 ist zumindest partiell ein zweites Ausgangsfluid, wie eine Flüssigkeit, beispielsweise ein Sirup, enthalten. In einem dritten Behälterabschnitt 5 des Behälters 2 ist ein fertiges Gemisch aus dem ersten Ausgangsfluid, dem zweiten Ausgangsfluid und einem Imprägnierungsmittel enthalten, wobei das Imprägniermittel optional ist.

Die drei Behälterabschnitte 3, 4 und 5 sind fluiddicht voneinander getrennt. Dabei ist der erste Behälterabschnitt 3 vom zweiten Behälterabschnitt 4 durch eine erste Trennwand 6 getrennt. Der zweite Behälterabschnitt 4 ist vom dritten Behälterabschnitt 5 durch eine zweite Trennwand 7 getrennt. Die drei Behälterabschnitte 3, 4 und 5 sind innerhalb desselben Behälters 2 vorhanden, weisen also eine gemeinsame Außenwandung 8 auf.

Aus dem ersten Behälterabschnitt 3 führt eine erste Leitung 9 zu einer ersten Pumpe 10 und dann zu einem Mischungsbereich 11. Aus dem zweiten Behälterabschnitt 4 führt eine zweite Leitung 12 zu einer zweiten Pumpe 13 und dann weiter zu dem Mischungsbereich 11. Es ist möglich, dass kurz vor dem Mischungsbereich 11 sowohl in der ersten Leitung 9 als auch der zweiten Leitung 12 jeweils ein Regelungsventil 14 verbaut ist. Zwischen dem Mischungsbereich 11 und der ersten Pumpe 10 bzw. der zweiten Pumpe 13 ist auch ein Flowindikator 15 verbaut. Zwischen diesem Flowindikator 15 und den Regelungsventilen 14 sind Rückschlagklappen 16 vorhanden.

Die erste Pumpe 10 und die zweite Pumpe 13 ist jeweils mit einem eigenen Synchronmotor verbunden, der nicht dargestellt ist. Jede der beiden Synchronmotoren ist mit einem eigenen Frequenzumformer verbunden, wobei der Frequenzumformer ebenfalls nicht dargestellt ist.

Die beiden Ausgangsfluide, also das erste Ausgangsfluid und das zweite Ausgangsfluid, werden im Mischungsbereich 11 gemischt und nachfolgend in einer gemeinsamen Leitung 17 zu einem Kühler 18 verbracht. Danach wird über die gemeinsame Leitung 17 das gekühlte Gemisch zu einer weiteren Pumpe 19, die als Gemischpumpe oder Karbonisierungspumpe bezeichnet wird, verbracht. Auch diese Pumpe 19 ist mit einem eigenen Synchronmotor verbunden, der wiederum von einem eigenen Frequenzumformer angesteuert ist.

Die von der Pumpe 19 geförderte Gemischmenge dringt dann in einen Injektor 20 ein. Der Injektor 20 ist als Venturi-Düse ausgestaltet. Eine Bypass-Leitung 21 verbindet einen Ausgang des Injektors 20 mit dem Mischungsbereich 11. Der Ausgang des Injektors 20 ist jedoch auch über eine Leitung 22 und/oder über eine Leitung 23 mit dem dritten Behälterabschnitt 5 des Behälters 2 verbunden. In der Leitung 22 kann auch eine Druckmessdose 24 vorhanden sein, die mit einem Absperr- oder Drosselventil 25 in derselben Leitung 22 verbunden ist.

Über eine weitere Pumpe 26 in einer aus dem dritten Behälterabschnitt 5 führenden Leitung 27, lässt sich das fertige Gemisch einem Füller 28 zubringen.

Die gemeinsame Leitung 17 und Bypass-Leitung 21 sind so miteinander verschalten, dass sich ein Kreislauf im Uhrzeigersinn, wie mit dem Pfeil A symbolisiert, einstellen kann. Es ist jedoch auch möglich, die Beschickung des Kreislaufes derart zu wählen, dass eine der Pfeilrichtung A entgegengesetzte Richtung erzielt wird, wodurch der Injektor 20 letztendlich umgangen wird.

Die einzelnen Pumpen 10, 13, 19 und 26 sind als Kreiselpumpen ausgebildet und weisen zugeordnete Synchronmotoren auf, die durch eigene Frequenzumformer angesteuert sind. Die Synchronmotoren sind also unabhängig voneinander ansteuerbar.

Als geeigneter Frequenzumrichter hat sich ein solcher vom Typ Danfoss FC302 herausgestellt, da dieser nicht nur Asynchronmotoren, sondern auch Synchronmotoren ansteuern kann.

## Patentansprüche

1. Mixer (1) zum Mischen und Fördern von unterschiedlichen Fluiden für eine Getränkeabfüllanlage, mit zumindest einem ersten Behälterabschnitt (3), zur Aufnahme eines ersten Ausgangsfluids, mit einem zweiten Behälterabschnitt (4), zur Aufnahme eines zweiten Ausgangsfluids, wobei eine erste Pumpe (10) in einer aus dem ersten Behälterabschnitt (3) führenden ersten Leitung (9) angeordnet ist, um das erste Ausgangsfluid einem Mischungsbereich (11) zuzuführen, und eine zweite Pumpe (13) in einer aus dem zweiten Behälterabschnitt (4) führenden zweiten Leitung (12) angeordnet ist, um das zweite Ausgangsfluid dem Mischungsbereich (11) zuzuführen, **dadurch gekennzeichnet, dass** die erste Pumpe und die zweite Pumpe (10, 13) mit je einem Synchronmotor angetrieben sind und jeder Synchronmotor mit einem Frequenzumformer zur Steuerung der Durchflussregelung verbunden ist, wobei der erste und der zweite Behälterabschnitt (3, 4) in einem gemeinsamen liegenden Behälter mit jeweils unten angeschlossenen Auslaufleitungen ausgebildet sind.

2. Mixer (1) nach Anspruch 1, **dadurch gekennzeichnet, dass** die erste und zweite Pumpe (10, 13) jeweils als Kreiselpumpe ausgebildet ist.

3. Mixer (1) nach Anspruch 1 oder 2, **dadurch gekennzeichnet, dass** im Mischungsbereich (11) nach einem Einmündungsbereich der zweiten Leitung (12) in die erste Leitung (9) ein Kühler (18) angeordnet ist, wobei ferner eine Gemischpumpe (19) zum Fördern der gekühlten Mischung aus dem ersten und zweiten Ausgangsfluid zu einem Injektor (20) stromabwärts der ersten und zweiten Pumpe (10,13) angeordnet ist.

4. Mixer (1) nach Anspruch 3, **dadurch gekennzeichnet, dass** ein Injektorausgangsbereich des Injektors (20) mit einem dritten Behälterabschnitt (5) des Behälters (2) verbunden ist, um das zur Abfüllung an der Getränkeabfüllanlage vorbereitete Fluid zwischenzulagern.

5. Mixer (1) nach Anspruch 3 oder 4, **dadurch gekennzeichnet, dass** der Injektor (20) zur Zufuhr eines Imprägnierungsmittels, wie Gas, ausgelegt ist.

6. Mixer (1) nach Anspruch 5, **dadurch gekennzeichnet, dass** das erste Ausgangsfluid eine Flüssigkeit, wie Wasser ist, das zweite Ausgangsfluid eine Flüssigkeit, wie Sirup ist, und das Imprägnierungsmittel CO₂, O₂, Stickstoff oder Lachgas ist.

7. Mixer (1) nach einem der Ansprüche 3 bis 6, **dadurch gekennzeichnet, dass** eine dem Injektor (20) nachgelagerte Bypass-Leitung (21) einen Kreislauf vom Einmündungsbereich, über den Kühler (18), die synchronmotorisch angetriebene Gemischpumpe (19), den Injektor (20), bis zum Einmündungsbereich, oder anders herum, gewährleistet.

8. Mixer (1) nach einem der Ansprüche 4 bis 7, **dadurch gekennzeichnet, dass** dem dritten Behälterabschnitt (5) eine synchronmotorisch angetriebene Produktpumpe (26) nachgelagert ist.

9. Mixer (1) nach einem der vorhergehenden Ansprüche, **dadurch gekennzeichnet, dass** ein Motor mit Direktantrieb oder ein getriebeloser Motor, wie ein Torquemotor, als Synchronmotor für eine der Pumpen eingesetzt ist.

10. Getränkeabfüllanlage mit einem Mixer (1) nach einem der Ansprüche 1 bis 9.

11. Verfahren zum Betreiben einer Getränkeabfüllanlage nach Anspruch 10, wobei der Frequenzumformer des jeweiligen Synchronmotors der ersten Pumpe (10), der zweiten Pumpe (13), der Gemischpumpe (19) und/oder der Produktpumpe (26) so angesteuert wird, dass über eine Modulation der jeweiligen Pumpe (10, 13, 19, 26) eine Durchflussregelung erreicht wird.

12. Verfahren nach Anspruch 11, wobei am Injektor (20) der Durchfluss an gemischter Flüssigkeit konstant gehalten wird, die Arbeitsgeschwindigkeit der einzelnen Komponenten aber variabel gehalten wird.

## Claims

1. Mixer (1) for mixing and conveying different fluids for a beverage bottling plant, having at least one first container section (3) for receiving a first starting fluid, having a second container section (4) for receiving a second starting fluid, wherein a first pump (10) is arranged in a first pipe (9) leading out of the first container section (3), in order to conduct the first starting fluid to a mixing area (11), and a second pump (13) is arranged in a second pipe (12) leading out of the second container section (4), in order to conduct the second starting fluid to the mixing area (11), **characterised in that** the first pump and the second pump (10, 13) are each driven by a synchronous motor and each synchronous motor is connected to a frequency converter for controlling the flow regulation, wherein the first and the second container sections (3, 4) are formed in a common lying container having outlet pipes respectively attached at the bottom.

2. Mixer (1) according to Claim 1, **characterised in that** the first and second pumps (10, 13) are each designed as centrifugal pumps.

3. Mixer (1) according to Claim 1 or 2, **characterised in that** a cooler (18) is arranged in the mixing area (11) after a junction area where the second pipe (12) joins the first pipe (9), wherein in addition a mixture pump (19) is arranged downstream of the first and second pumps (10, 13) for conveying the cooled mixture consisting of the first and second starting fluids to an injector (20).

4. Mixer (1) according to Claim 3, **characterised in that** an injector outlet area of the injector (20) is connected to a third container section (5) of the container (2), in order to temporarily store the fluid prepared for bottling at the beverage bottling plant.

5. Mixer (1) according to Claim 3 or 4, **characterised in that** the injector (20) is designed for supplying an impregnating agent, such as gas.

6. Mixer (1) according to Claim 5, **characterised in that** the first starting fluid is a liquid, such as water, the second starting fluid is a liquid, such as syrup, and the impregnating agent is CO₂, O₂, nitrogen or nitrous oxide.

7. Mixer (1) according to any one of Claims 3 to 6, **characterised in that** a by-pass pipe (21) downstream from the injector (20) ensures that there is a circulating flow from the junction area via the cooler (18), the mixture pump (19), driven by a synchronous motor, and the injector (20) to the junction area, or vice-versa.

8. Mixer (1) according to any one of Claims 4 to 7, **characterised in that** a product pump (26) driven by a synchronous motor is arranged downstream from the third container section (5).

9. Mixer (1) according to any one of the preceding claims, **characterised in that** a motor with direct drive or a gearless motor, such as a torque motor, is used as the synchronous motor for one of the pumps.

10. Beverage bottling plant having a mixer (1) according to any one of Claims 1 to 9.

11. Method for operating a beverage bottling plant according to Claim 10, wherein the frequency converter of the respective synchronous motor of the first pump (10), of the second pump (13), of the mixture pump (19) and/or of the product pump (26) is actuated in such a way that flow regulation is achieved via a modulation of the respective pump (10, 13, 19, 26).

12. Method according to Claim 11, wherein the flow of mixed liquid is kept constant at the injector (20) but the operating speed of the individual components is kept variable.

## Revendications

1. Mélangeur (1) pour mélanger et alimenter différents fluides dans une installation de remplissage de boissons, comportant au moins une première section de cuve (3) pour recevoir un premier fluide de sortie et une deuxième section de cuve (4) pour recevoir un deuxième fluide de sortie, dans lequel une première pompe (10) est agencée sur une première conduite (9) sortant de la première section de cuve (3) pour mener le premier fluide de sortie dans une zone de mélange (11), et une deuxième pompe (13) est agencée sur une deuxième conduite (12) sortant de la deuxième section de cuve (4) pour mener le deuxième fluide de sortie dans ladite zone de mélange (11), **caractérisé en ce que** la première pompe et la deuxième pompe (10, 13) sont chacune entraînée par un moteur synchrone et chaque moteur synchrone est connecté à un convertisseur de fréquence pour commander la régulation de débit, dans lequel les première et deuxième sections de cuve (3, 4) sont constituées dans une cuve commune avec des conduites de sortie respectives connectées par en dessous.

2. Mélangeur (1) selon la revendication 1, **caractérisé en ce que** les première et deuxième pompes (10, 13) sont chacune constituée sous forme d'une pompe centrifuge.

3. Mélangeur (1) selon la revendication 1 ou 2, **caractérisé en ce qu'**un refroidisseur (18) est agencé dans la zone de mélange (11) après une zone de jonction de la deuxième conduite (12) dans la première conduite (9), dans lequel une pompe de mélange (19) est en outre agencée en aval des première et deuxième pompes (10, 13) pour alimenter le mélange refroidi des premier et deuxième fluides de sortie dans un injecteur (20).

4. Mélangeur (1) selon la revendication 3, **caractérisé en ce qu'**une zone de sortie de l'injecteur (20) est connectée à une troisième section de cuve (5) de la cuve (2) pour le stockage intermédiaire du fluide préparé pour le remplissage de l'installation de remplissage de boissons.

5. Mélangeur (1) selon la revendication 3 ou 4, **caractérisé en ce que** l'injecteur (20) est constitué pour alimenter un produit d'imprégnation, tel qu'un gaz.

6. Mélangeur (1) selon la revendication 5, **caractérisé en ce que** le premier fluide de sortie est un fluide tel que de l'eau, le deuxième fluide de sortie est un fluide tel qu'un sirop, et le produit d'imprégnation est du C0₂, de l'0₂, de l'azote ou du protoxyde d'azote.

7. Mélangeur (1) selon l'une des revendications 3 à 6, **caractérisé en ce qu'**une conduite de dérivation (21) agencée en aval de l'injecteur (20) constitue un circuit allant de la zone de jonction au refroidisseur (18), à la pompe de mélange (19) entraînée par un moteur synchrone et à l'injecteur (20) pour revenir à la zone de jonction, ou inversement.

8. Mélangeur (1) selon l'une des revendications 4 à 7, **caractérisé en ce qu'**une pompe de produit (26) entraînée par un moteur synchrone est agencée en aval de la troisième section de cuve (5).

9. Mélangeur (1) selon l'une des revendications précédentes, **caractérisé en ce qu'**un moteur à entraînement direct ou un moteur sans boîte de transmission, tel qu'un moteur couple, est utilisé comme moteur synchrone pour l'une des pompes.

10. Installation de remplissage de boissons comportant un mélangeur (1) selon l'une des revendications 1 à 9.

11. Procédé d'exploitation d'une installation de remplissage de boissons selon la revendication 10, dans lequel le convertisseur de fréquence des moteurs synchrones respectifs de la première pompe (10), de la deuxième pompe (13), de la pompe de mélange (19) et/ou de la pompe de produit (26) est commandé de telle sorte qu'une régulation de débit est obtenue par modulation de la pompe respective (10, 13, 19, 26).

12. Procédé selon la revendication 11, dans lequel le débit de fluide mélangé de l'injecteur (20) est maintenu constant, mais la vitesse de fonctionnement des composants individuels est maintenue variable.
